**Europäisches Patentamt**

**European Patent Office**

**Office européen des brevets**

(19)

(11) Numéro de publication : **0 350 394 B1**

(12)

# FASCICULE DE BREVET EUROPEEN

(45) Date de publication du fascicule du brevet :
**18.12.91 Bulletin 91/51**

(51) Int. Cl.$^5$ : **E04D 13/04**

(21) Numéro de dépôt : **89401919.9**

(22) Date de dépôt : **05.07.89**

(54) **Système d'évacuation d'eaux pluviales.**

(30) Priorité : **06.07.88 FR 8809168**

(43) Date de publication de la demande :
**10.01.90 Bulletin 90/02**

(45) Mention de la délivrance du brevet :
**18.12.91 Bulletin 91/51**

(84) Etats contractants désignés :
**BE DE ES FR IT LU NL SE**

(56) Documents cités :
**EP-A- 0 122 800**
**US-A- 2 284 416**
**US-A- 2 322 842**
**US-A- 3 095 219**

(73) Titulaire : **SIPLAST S.A.**
**12, rue Cabanis**
**F-75680 Paris Cédex 14 (FR)**

(72) Inventeur : **Maillet, Jean-Claude**
**26 Avenue du Petit Lac**
**F-95210 Saint Gratien (FR)**
Inventeur : **Gerby, Claude**
**27 rue Mozart**
**F-78330 Fontenay Le Fleury (FR)**

(74) Mandataire : **Armengaud Ainé, Alain et al**
**Cabinet ARMENGAUD AINE 3 Avenue**
**Bugeaud**
**F-75116 Paris (FR)**

# Description

L'invention concerne un système d'évacuation d'eaux pluviales utilisable pour raccorder le revêtement d'étanchéité d'une toiture-terrasse à un conduit d'évacuation desdites eaux pluviales.

Pour évacuer les eaux de pluie d'une toiture-terrasse, il est courant de raccorder le revêtement d'étanchéité, dont est généralement pourvu cette toiture terrasse, à des conduits d'évacuation par l'intermédiaire d'ouvrages appelés "entrées d'eaux pluviales".

Ces ouvrages sont généralement composés de deux parties, à savoir, d'une part, une platine, qui présente un orifice en son centre et dont les bords sont raccordés à l'étanchéité de la toiture-terrasse en étant pris en sandwich entre deux couches de cette étanchéité, et, d'autre part, un moignon, qui consiste en un élément tubulaire ouvert à ses deux extrémités et dont une extrémité est soudée à la platine de manière que l'ouverture de ladite extrémité coincide avec l'orifice de la platine tandis que l'autre extrémité vient s'emboîter dans le conduit d'évacuation.

En rénovation, on rencontre fréquemment des difficultés pour réaliser l'étanchéité entre le moignon de l'entrée d'eaux pluviales à poser et le conduit d'évacuation existant.

On connaît un système d'évacuation d'eaux pluviales dans lequel une étanchéité est assurée entre l'élément tubulaire ou moignon, solidaire de la platine, et le conduit d'évacuation (EP-A-0122800). Dans un tel système, ledit élément tubulaire comporte, à son extrémité s'emboîtant dans le conduit d'évacuation, un joint compressible formé d'un manchon en un matériau compressible, et notamment en un matériau élastomérique, ayant un diamètre extérieur légèrement inférieur au diamètre intérieur du conduit d'évacuation, ledit manchon étant enserré dans une paire de machoîres annulaires solidarisées par des vis qui traversent le manchon et permettent, par serrage, de rapprocher les machoîres l'une de l'autre et ainsi de comprimer le manchon, ce qui appuie ledit manchon contre la paroi intérieure du conduit d'évacuation et assure l'étanchéité.

Un tel système d'évacuation d'eaux pluviales à joint compressible, bien que permettant d'assurer une étanchéité convenable avec le conduit d'évacuation, présente encore certains inconvénients. En particulier la mise en compression du joint par serrage des vis est difficile à réaliser, car elle doit être effectuée à travers l'élément tubulaire depuis l'orifice de la platine. En outre, le rétrécissement de section entraîné par la présence des machoîres enserrant le manchon compressible crée des pertes de charge perturbant l'écoulement.

L'invention propose un système d'évacuation d'eaux pluviales à joint compressible, qui permet de remédier aux insuffisances du système décrit ci-dessus.

Le système selon l'invention pour l'évacuation des eaux pluviales comporte une platine percée d'un orifice, un premier élément tubulaire ouvert à ses deux extrémités et raccordé par l'une desdites extrémités à la platine de telle sorte que l'ouverture présente à cette extrémité de l'élément tubulaire coincide avec l'orifice de la platine, un joint compressible en forme de manchon en une matière élastique, ledit joint étant coaxial audit élément tubulaire et disposé de manière à venir en butée contre l'extrémité libre de ce dernier, et des moyens propres à maintenir le joint en place et à assurer sa compression et il se caractérise en ce que lesdits moyens propres à maintenir le joint en place et à assurer sa compression comprennent, d'une part, un second élément tubulaire qui est monté coulissant dans le premier élément tubulaire de telle sorte que l'une de ses extrémités débouche sur la face externe de la platine et qu'il présente à son autre extrémité une partie émergeant de l'extrémité libre du premier élément tubulaire, le joint, qui vient en butée contre ladite extrémité libre, étant monté sur ladite partie émergeante du second élément tubulaire de manière à ce qu'un déplacement longitudinal dudit second élément tubulaire dans le premier, qui conduit à un déplacement de cette partie émergeante vers l'intérieur du premier élément tubulaire, entraîne une compression du joint et par là-même une augmentation du diamètre extérieur de ce dernier et, d'autre part, des moyens d'entraînement disposés du côté de la face externe de la platine et agencés pour coopérer avec le second élément tubulaire, à l'extrémité de ce dernier voisine de la platine, de manière à assurer ledit déplacement longitudinal du second élément tubulaire conduisant à la compression du joint.

Avantageusement la platine présente dans sa partie centrale une dépression en forme de cuvette, dans le fond de laquelle est ménagé l'orifice porté par la platine, et l'extrémité du second élément tubulaire, qui est située du côté de la platine, débouche dans ladite cuvette et les moyens d'entraînement associés au second élément tubulaire sont montés dans cette cuvette.

Dans cette forme de réalisation, l'extrémité du second élément tubulaire débouchant dans la cuvette de la platine est agencée sous la forme d'une collerette s'ouvrant vers l'extérieur et les moyens d'entraînement associés au second élément tubulaire comprennent une première bague filetée intérieurement et montée dans la cuvette de la platine de manière à être immobilisée en rotation par rapport à ladite cuvette, une seconde bague présentant des filetages intérieur et extérieur de sens contraires et se vissant dans la première bague, ladite seconde bague comportant à son extrémité tournée vers le fond de la cuvette un rebord annulaire intérieur sur lequel repose la collerette du second élément tubulaire, et un organe de manoeuvre en forme de bouchon creux comportant une pluralité d'orifices ménagés dans sa paroi pour le passage de l'eau et dont la partie côté extrémité ouverte se visse, par un filetage extérieur, dans la seconde bague, ledit filetage s'arrêtant contre un épaulement ménagé dans ledit organe de manoeuvre et ayant une longueur pas supérieure à celle du filetage intérieur de la seconde bague.

Le joint compressible en forme de manchon peut être monté de diverses manières sur la partie du second élément tubulaire, qui émerge de l'extrémité libre du premier élément tubulaire contre laquelle ledit joint vient en butée. Selon une forme de réalisation, l'extrémité libre du premier élément tubulaire et l'extrémité correspondante du second élément tubulaire sont munies chacune d'une collerette externe, lesdites collerettes formant une paire de machoîres annulaires enserrant le joint. Selon une autre forme de réalisation, le joint compressible en forme de manchon est pourvu d'une rainure annulaire, ménagée dans sa face tournée du côté du premier élément tubulaire, dans laquelle vient se loger l'extrémité libre dudit premier élément tubulaire et l'extrémité correspondante du second élément tubulaire est munie d'une collerette externe sur la face intérieure de laquelle s'appuie la face non rainurée du joint. Selon encore une autre forme de réalisation, le manchon formant le joint compressible est pourvu d'une rainure annulaire sur sa face tournée du côté du premier élément tubulaire, dans laquelle vient se loger l'extrémité libre dudit premier élément tubulaire, et la surface latérale interne dudit manchon est pourvue d'ergots s'insérant en force dans des lumières ménagées dans la partie du second élément tubulaire émergeant du premier élément tubulaire.

Le matériau élastique constituant le joint compressible en forme de manchon est avantageusement un matériau élastomérique, que l'on peut choisir parmi les divers élastomères utilisés de manière habituelle pour la réalisation de joints d'étanchéité, par exemple caoutchouc néoprène ou encore caoutchouc EP ou EPDM.

Hormis le joint compressible en matériau élastique, les autres éléments du système selon l'invention peuvent être réalisés en un métal, par exemple aluminium ou cuivre, ou encore en un matériau plastique tel que PVC, polypropylène ou polyéthylène, ledit matériau plastique renfermant avantageusement une charge, notamment talc ou craie.

Comme indiqué précédemment, le système selon l'invention pour l'évacuation d'eaux pluviales est utilisé pour raccorder le revêtement d'étanchéité d'une toiture-terrasse à un conduit d'évacuation des eaux pluviales de telle sorte que les eaux pluviales tombant sur la toiture-terrasse puissent être acheminées de manière étanche vers des conduits d'évacuation. Pour ce faire les bords de la platine dudit système sont pris en sandwich entre deux couches de revêtement d'étanchéité de la toiture-terrasse et la partie de ce système comportant le joint compressible est emboîtée de manière étanche dans ledit conduit d'évacuation.

D'autres caractéristiques et avantages du système selon l'invention pour l'évacuation d'eaux pluviales apparaîtront à la lecture de la description suivante d'une forme de réalisation dudit système donnée, à titre illustratif et non limitatif, en référence au dessin annexé sur lequel :

— la figure 1 représente schématiquement, en coupe par un plan axial longitudinal, un système selon l'invention raccordant une toiture-terrasse à un conduit d'évacuation des eaux pluviales, et

— les figures 2 et 3 montrent schématiquement deux variantes du montage du joint en forme de manchon sur la partie du second élément tubulaire, qui émerge du premier élément tubulaire.

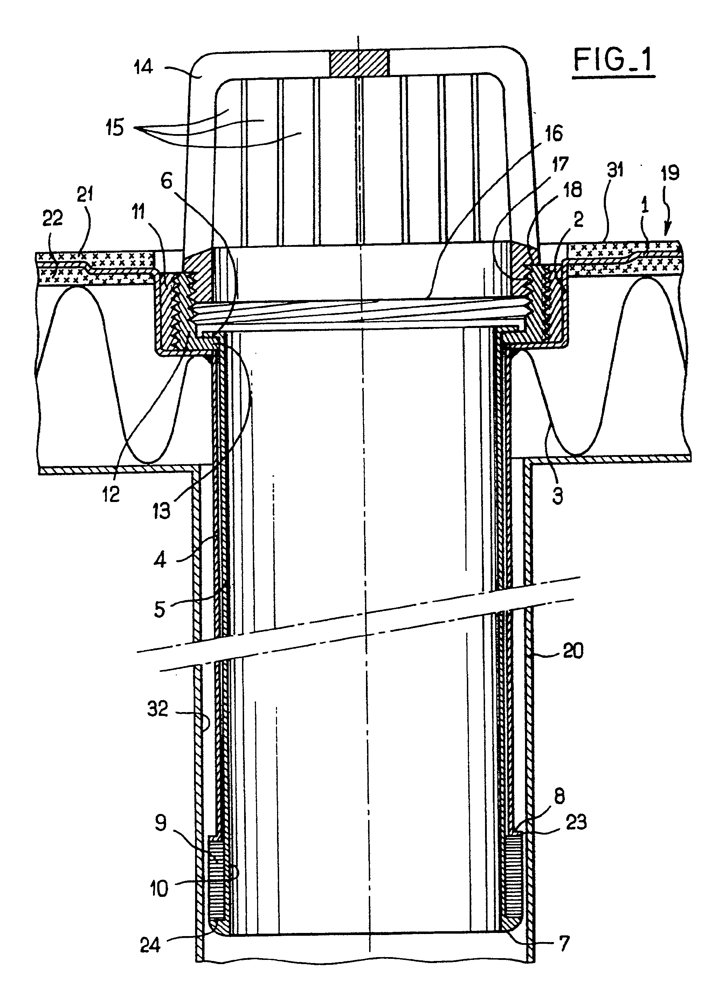

En se référant à la figure 1, le système selon l'invention pour l'évacuation d'eaux pluviales, qui raccorde l'étanchéité 31 d'une toiture-terrasse 19 à un conduit 20 d'évacuation des eaux pluviales, comporte une platine 1, un premier élément tubulaire 4, un second élément tubulaire 5, un joint compressible 9 et des moyens 33 d'entraînement associés au second élément tubulaire. La platine 1 présente dans sa partie centrale une dépression 2 ayant la forme d'une cuvette cylindrique, qui présente un axe perpendiculaire au plan de la platine et dont le fond est percé en son centre d'un orifice 3. Ladite platine, dont la forme peut être quelconque et, par exemple, carrée, rectangulaire, polygonale ou encore circulaire, est raccordée à l'étanchéité 31 de la toiture-terrasse 19, notamment en prenant son bord entre deux couches 21, 22 de ladite étanchéité. Le premier élément tubulaire 4, qui est ouvert à ses deux extrémités et possède un axe de symétrie coincidant avec l'axe de la cuvette de la platine, est raccordé par l'une desdites extrémités au fond de la cuvette de la platine 1 de telle sorte que l'ouverture de cette extrémité coincide avec l'orifice 3 de ladite cuvette, l'autre extrémité 8 dudit premier élément tubulaire étant libre et étant pourvue d'une collerette 23. Le second élément tubulaire 5, coaxial au premier élément tubulaire 4, est monté coulissant dans ce dernier et de manière à présenter une extrémité 6, qui est agencée en forme de collerette et débouche dans la cuvette 2 de la platine 1, et une partie 10, qui émerge de l'extrémité libre 8 du premier élément tubulaire et présente une extrémité libre 7 pourvue d'une collerette 24. Le joint compressible 9 consiste en un manchon en un matériau élastique tel qu'un matériau élastomérique, qui est monté sur la partie 10 du second élément tubulaire de manière à être enserré entre les collerettes 23 et 24, qui forment une paire de machoîres annulaires dont la collerette 23 constitue une machoîre fixe formant butée pour ledit joint. Un déplacement longitudinal du second élément tubulaire 5 dans le premier élément tubulaire 4, qui se traduit par un déplacement de la partie 10 sur laquelle est montée le manchon vers l'intérieur du premier élément tubulaire, c'est-à-dire par un déplacement de la collerette 24 vers la collerette fixe 23, entraîne une compression du joint 9 et par là-même une augmentation du diamètre extérieur de ce dernier. Les diamètres externes des collerettes 23 et 24 et du joint compressible 9 sont choisis de telle sorte que l'ensemble formé par les premier et second éléments tubulaires et le joint compressible puisse être inséré dans le conduit 20 d'évacuation des eaux pluviales avant compression dudit joint et qu'après compression de ce joint, ce dernier assure une liaison étanche entre ledit ensemble et le conduit d'évacuation des eaux pluviales. Les moyens (5, 6, 11, 12, 13, 14, 17, 18) d'entraînement associés au second élément tubulaire en vue d'assurer le déplacement longitudinal de ce dernier comprennent une première bague 11 filetée intérieurement et montée dans la cuvette 2 de la platine 1 de manière à être immobilisée en rotation par rapport à ladite cuvette, une seconde bague 12 présentant des filetages intérieur et extérieur de sens contraires et se vissant dans la première bague 11, ladite seconde bague comportant à son extrémité tournée vers le fond de la dépression un rebord annulaire 13 intérieur sur lequel repose la collerette 6 du second élément tubulaire 5, et un organe de manoeuvre 14 en forme de bouchon creux comportant une pluralité d'orifices ménagés dans sa paroi pour le passage de l'eau et dont la partie côté extrémité ouverte 16 se visse, par un filetage extérieur 17, dans la seconde bague, ledit filetage s'arrêtant contre un épaulement 18 ménagé dans ledit organe de manoeuvre 14 et ayant une longueur pas supérieure à celle du filetage intérieur de la seconde bague 12.

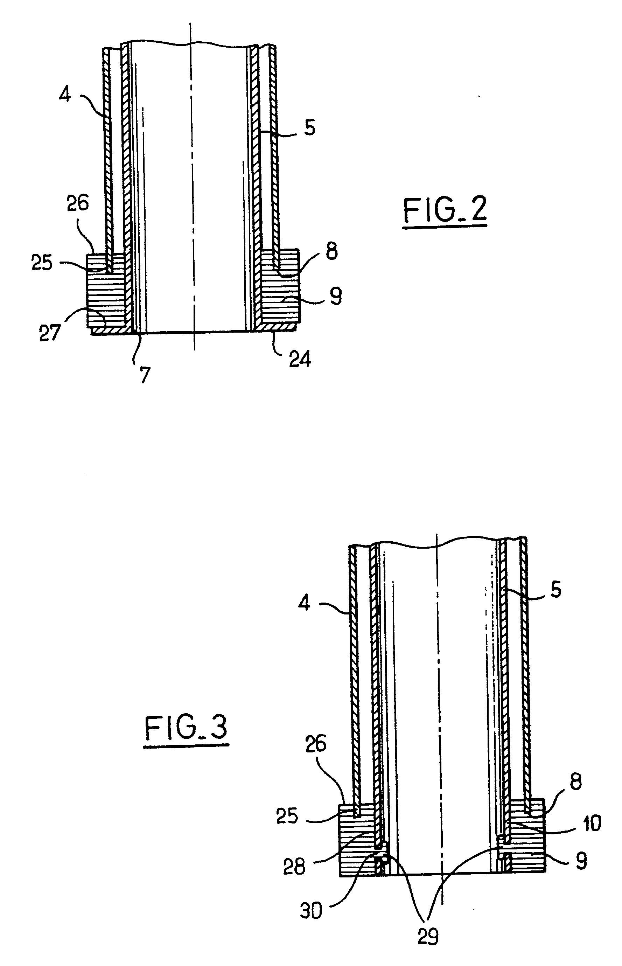

Dans la variante schématisée sur la figure 2, l'extrémité libre 8 du premier élément tubulaire 4 est exempte de collerette et le manchon formant le joint compressible 9 est pourvu d'une rainure annulaire 25 ménagée dans sa face 26 tournée du côté du premier élément tubulaire, ladite extrémité libre 8 se logeant dans ladite rainure et formant butée pour le manchon 9, et l'extrémité 7 du second élément tubulaire 5 est munie d'une collerette externe 24 sur la face intérieure de laquelle s'appuie la face non rainurée 27 du joint 9.

Dans la variante schématisée sur la figure 3, l'extrémité libre 8 du premier élément tubulaire 4 est exempte de collerette et le manchon formant le joint compressible 9 est pourvu d'une rainure annulaire 25 ménagée dans sa face 26 tournée du côté du premier élément tubulaire, ladite extrémité libre 8 se logeant dans ladite rainure 25 et formant butée pour le manchon 9, et la surface latérale interne 28 du joint en forme de manchon 9 est pourvue d'ergots 29 s'insérant en force dans des lumières 30 ménagées dans la paroi de la partie 10 du second élément tubulaire 5, qui émerge du premier élément tubulaire.

La réalisation du raccord entre la toiture-terrasse 19 et le conduit 20 d'évacuation des eaux pluviales au moyen du système selon l'invention peut être schématisée comme suit.

On insère tout d'abord dans le conduit 20 la partie dudit système comportant le joint compressible 9 et l'on réalise le raccord de la platine 1 à l'étanchéité 31 de la toiture-terrasse 19, par exemple en prenant le bord de ladite platine entre deux couches 21, 22 de cette étanchéité. On réalise ensuite l'étanchéité entre le conduit 20 et le système selon l'invention par vissage de l'organe de manoeuvre 14 des moyens d'entraînement dans la seconde bague filetée 12 desdits moyens d'entraînement. Au cours de cette opération, la seconde bague filetée 12 vient en butée contre l'épaulement 18 de l'organe de manoeuvre 14. En poursuivant le vissage, cette seconde bague est entraînée en rotation et se déplace vers le haut puisque la première bague 11 est immobilisée en rotation. Au cours de son déplacement, la bague 12 entraîne vers le haut le second élément tubulaire 5, dont la collerette 6 repose sur le rebord annulaire intérieur 13 de ladite bague 12, ce qui a pour effet, puisque le premier élément tubulaire 4 est fixe car solidaire de la platine 1, de comprimer le joint 9 contre la paroi interne 32 du conduit 20 d'évacuation et ainsi d'assurer l'étanchéité recherchée.

Bien entendu l'invention ne se limite pas au mode de réalisation décrit et représenté.

## Revendications

1. Système pour l'évacuation des eaux pluviales comportant une platine (1) percée d'un orifice (3), un premier élément tubulaire (4) ouvert à ses deux extrémités et raccordé à l'une desdites extrémités à la platine de telle sorte que l'ouverture présente à cette extrémité de l'élément tubulaire coincide avec l'orifice (3) de la platine, un joint compressible (9) en forme de manchon en une matière élastique, ledit joint étant coaxial audit élément tubulaire (4) et disposé de manière à venir en butée contre l'extrémité libre (8) de ce dernier, et des moyens (5, 6, 11, 12, 13, 14, 17, 18) propres à maintenir le joint en place et à assurer sa compression et se caractérisant en ce que lesdits moyens (5, 33) comprennent, d'une part, un second élément tubulaire (5) qui est monté coulissant dans le premier élément tubulaire de telle sorte que l'une (6) de ses extrémités débouche sur la face externe de la platine et qu'il présente à son autre extrémité (7) une partie (10) émergeant de l'extrémité libre (8) du premier élément tubulaire, le joint (9), qui vient en butée contre ladite extrémité libre, étant monté sur ladite partie émergeante du second élément tubulaire de manière à ce qu'un déplacement longitudinal dudit second élément tubulaire dans le premier, qui conduit à un déplacement de la partie émergeante (10) vers l'intérieur du premier élément tubulaire, entraîne une compression du joint (9) et par là-même une augmentation du diamètre extérieur de ce dernier et, d'autre part, des moyens (6, 11, 12, 13, 14, 17, 18) d'entraînement disposés du côté de la face externe de la platine et agencés pour coopérer avec le second élément tubulaire, à l'extrémité (6) de ce dernier voisine de la platine, de manière à assurer ledit déplacement longitudinal du second élément tubulaire conduisant à la compression du joint (9).

2. Système selon la revendication 1, caractérisé en ce que la platine présente dans sa partie centrale une dépression (2) en forme du cuvette, dans le fond de laquelle est ménagé l'orifice (3) porté par la platine et en ce que l'extrémité (6) du second élément tubulaire (5), qui est située du côté de la platine, débouche dans ladite cuvette et les moyens (6, 11, 12, 13, 14, 17, 18) d'entraînement associés au second élément tubulaire sont logés dans cette cuvette.

3. Système selon la revendication 2, caractérisé en ce que l'extrémité (6) du second élément tubulaire débouchant dans la cuvette de la platine est agencée en forme d'une collerette s'ouvrant vers l'extérieur et en ce que les moyens d'entraînement comprennent une première bague (11) filetée intérieurement et montée dans la cuvette (2) de la platine de manière à être immobilisée en rotation par rapport à ladite cuvette, une seconde bague (12) présentant des filetages intérieur et extérieur de sens contraires et se vissant dans la première bague (11), ladite seconde bague (12) comportant, à son extrémité tournée vers le fond de la cuvette, un rebord annulaire (13) intérieur sur lequel repose la collerette (6) du second élément tubulaire (5), et un organe de manoeuvre (14) en forme de bouchon creux comportant une pluralité d'orifices (15) ménagés dans sa paroi pour le passage de l'eau et dont la partie côté extrémité ouverte (16) se visse dans la seconde bague (12) par un filetage extérieur (17), ledit filetage s'arrêtant contre un épaulement (18) ménagé dans ledit organe de manoeuvre et ayant une longueur pas supérieure à celle du filetage intérieur de la seconde bague (12).

4. Système selon l'une des revendications 1 à 3, caractérisé en ce que l'extrémité libre (8) du premier élément tubulaire (4) et l'extrémité correspondante (7) du second élément tubulaire sont pourvues chacune d'une collerette externe, lesdites collerettes (23, 24) formant une paire de machoîres annulaires enserrant le joint (9) monté sur la partie (10) du second élément tubulaire (5).

5. Système selon l'une des revendications 1 à 3, caractérise en ce que l'extrémité libre (8) du premier élément tubulaire (4) est exempte de collerette et en ce que le manchon formant le joint compressible (9) est pourvu d'une rainure annulaire (25) ménagée dans sa face (26) tournée du côté du premier élément tubulaire (4), ladite extrémité (8) se logeant dans ladite rainure et formant butée pour le manchon (9),

et l'extrémité (7) du second élément tubulaire (5) est munie d'une collerette externe (24) sur la face intérieure de laquelle s'appuie la face non rainurée du manchon.

6. Système selon l'une des revendications 1 à 3, caractérisé en ce que l'extrémité libre (8) du premier élément tubulaire (4) est exempte de collerette et en ce que le manchon formant le joint (9) compressible est pourvu d'une rainure annulaire (25) ménagée dans sa face (26) tournée du côté du premier élément tubulaire, ladite extrémité (8) se logeant dans ladite rainure et formant butée pour le manchon (9), et la surface latérale interne (28) du joint en forme de manchon (9) est pourvue d'ergots (29) s'insérant en force dans des lumières (30) ménagées dans la paroi de la partie (10) du second élément tubulaire (5), qui émerge du premier élément tubulaire (4).

7. Système selon l'une des revendications 1 à 6, caractérisé en ce que le matériau élastique constituant le joint compressible est un matériau élastomère.

8. Système selon l'une des revendications 1 à 7, raccordant le revêtement d'étanchéité (31) d'une toiture-terrasse (19) à un conduit (20) d'évacuation des eaux pluviales de telle sorte que la platine (1) dudit système repose de manière étanche sur l'étanchéité (31) de la toiture-terrasse et que la partie de ce système comportant le joint (9) soit logée dans ledit conduit (20), le joint (9) étant comprimé contre la paroi interne (32) de ce conduit (20) de manière à assurer l'étanchéité.

9. Système selon la revendication 8, caractérisé en ce que le bord de la platine (1) est pris en sandwich entre deux couches (21, 22) de l'étanchéité (31) de la toiture-terrasse (19).

**Patentansprüche**

1. System zur Ableitung von Regenwasser mit einer Platine (1) mit einem Loch (3), einem an seinen zwei Enden offenen Rohrelement (4), das mit einem dieser Enden mit der Platine so verbunden ist, daß die an diesem Ende vorhandene Öffnung des Rohrelements mit dem Loch (3) der Platine zusammenfällt, einer komprimierbaren Dichtung (9) in Form einer Manschette aus elastischem Material, die koaxial zum Rohrelement (4) so angeordnet ist, daß sie gegen das freie Ende (8) desselben anschlägt, und mit Vorrichtungen (5, 6, 11, 12, 13, 14, 17, 18), welche die Dichtung an ihrem Platz halten und ihr Zusammendrücken bewirken, dadurch gekennzeichnet, daß diese Vorrichtungen (5, 33) einerseits ein zweites Rohrelement (5) aufweisen, das im ersten Rohrelement verschiebbar so gehalten ist, daß das eine (6) seiner Enden an der Außenseite der Platine mündet, und das an seinem anderen Ende (7) einen aus dem freien Ende (8) des ersten Rohrelements hervorstehenden Teil (10) aufweist, wobei die gegen dieses freie Ende anschlagende Dichtung (9) auf dem vorstehenden Teil des zweiten Rohrelements so montiert ist, daß eine Längsverschiebung des zweiten Rohrelements im ersten Rohrelement, welche zu einer Verschiebung des vorstehenden Teils (10) in Richtung auf das Innere des ersten Rohrelements führt, ein Zusammendrücken der Dichtung (9) und damit eine Vergrößerung von deren Außendurchmesser zur Folge hat, und die Vorrichtungen andererseits eine auf der Seite der Außenfläche der Platine angeordnete Stellvorrichtung (6, 11, 12, 13, 14, 17, 18) aufweisen, die so ausgebildet ist, daß sie mit dem zweiten Rohrelement an dessen der Platine nächstliegendem Ende (6) zusammenwirkt, um die Längsverschiebung des zweiten Rohrelements zu bewirken, die das Zusammendrücken der Dichtung (9) zur Folge hat.

2. System nach Anspruch 1, dadurch gekennzeichnet, daß die Platine in ihrem Mittelbereich eine napfförmige Vertiefung (2) aufweist, in deren Boden das von der Platine getragene Loch (3) ausgebildet ist, und daß das Ende (6) des zweiten Rohrelements (5), das sich auf der Seite der Platine befindet, in diesen Napf mündet und daß die zum zweiten Rohrelement gehörende Stellvorrichtung (6, 11, 12, 13, 14, 17, 18) in diesem angeordnet ist.

3. System nach Anspruch 2, dadurch gekennzeichnet, daß das im Napf der Platine mündende Ende (6) des zweiten Rohrelements (5) in Form eines nach außen gerichteten Flansches ausgebildet ist und daß die Stellvorrichtung einen ersten Ring (11) mit Innengewinde aufweist, der im Napf (2) der Platine drehfest bezüglich des Napfes montiert ist, daß ein zweiter Ring (12) mit Innengewinde und entgegengesetzt gerichtetem Außengewinde in den ersten Ring (11) einschraubbar ist und an seinem dem Boden des Napfes zugewandten Ende eine innere ringförmige Randleiste (13) aufweist, auf der der Flansch (6) des zweiten Rohrelements (5) aufliegt, und daß ein Betätigungselement (14) in Form eines hohlen Stopfens in seiner Wand eine Mehrzahl von Öffnungen (15) für den Durchtritt von Wasser aufweist und dessen an der Seite seines offenen Endes (16) gelegener Teil in den zweiten Ring (12) mittels eines Außengewindes (17) einschraubbar ist, wobei dieses Gewinde bis zu einer in dem Betätigungselement ausgebildeten Schulter (18) reicht und seine Länge nicht größer ist als die des Innengewindes des zweiten Ringes (12).

4. System nach einem der Ansprüche 1 bis 3, dadurch gekennzeichnet, daß das freie Ende (8) des ersten Rohrelements (4) und das entsprechende Ende (7) des zweiten Rohrelements (5) jedes mit einem Außenflansch versehen sind, wobei die Flansche (23, 24) ein Paar von ringförmigen Spannbacken bilden, welche die auf dem Teil (10) des zweiten Rohrelements (5) montierte Dichtung (9) einspannen.

5. System nach einem der Ansprüche 1 bis 3, dadurch gekennzeichnet, daß das freie Ende (8) des ersten Rohrelements (4) keinen Flansch aufweist und daß die die komprimierbare Dichtung (9) bildende Manschette in ihrer dem ersten Rohrelement (4) zugewandten Seite (26) eine Ringnut (25) aufweist, in die das Ende (8) eingreift und einen Anschlag für die Manschette (9) bildet, und das Ende (7) des zweiten Rohrelements (5) mit einem Außenflansch (24) versehen ist, auf dessen Innenseite sich die nutfreie Seite der Manschette abstützt.

6. System nach einem der Ansprüche 1 bis 3, dadurch gekennzeichnet, daß das freie Ende (8) des ersten Rohrelements (4) keinen Flansch aufweist und die die komprimierbare Dichtung (9) bildende Manschette in ihrer dem ersten Rohrelement zugewandten Seite (26) eine Ringnut (25) aufweist, in welche das Ende (8) eingreift und einen Anschlag für die Manschette (9) bildet, und die seitliche Innenfläche (28) der in Form einer Manschette (9) ausgebildeten Dichtung mit Zapfen (29) versehen ist, die in Löcher (30) eindrückbar sind, die in der Wand des aus dem ersten Rohrelement (4) vorstehenden Teils (10) des zweiten Rohrelements (5) ausgebildet sind.

7. System nach einem der Ansprüche 1 bis 6, dadurch gekennzeichnet, daß das die komprimierbare Dichtung bildende elastische Material ein Elastomermaterial ist.

8. System nach einem der Ansprüche 1 bis 7, welches die Abdichtungsschicht (31) einer Dachterrasse (19) mit einer Leitung (20) zur Abführung von Regenwasser so verbindet, daß die Platine (1) des Systems dicht auf der Abdichtungsschicht (31) der Dachterrasse ruht und der die Dichtung (9) aufweisende Teil dieses Systems sich in der Leitung (20) befindet, wobei die Dichtung (9) gegen die Innenwand (32) dieser Leitung (20) gedrückt wird, um die Abdichtung zu gewährleisten.

9. System nach Anspruch 8, dadurch gekennzeichnet, daß der Rand der Platine (1) wie ein Sandwich zwischen zwei Lagen (21, 22) der Abdichtungsschicht (31) der Dachterrasse (19) eingelegt ist.

## Claims

1. A rainwater evacuation system comprising a plate (1) in which there is an orifice (3), a first tubular element (4) open at both ends and having one of the said ends connected to the plate so that the aperture provided at this end of the tubular element coincides with the orifice (3) in the plate, a compressible seal (5) in the form of a sleeve consisting of an elastic material, the said seal being coaxial with the said tubular element (4) and so disposed that it abuts the free end (8) of the latter, and means (5, 33) adapted to maintain the seal in position and to ensure its compression and being characterised in that the said means (5, 6, 11, 12, 13, 14, 17, 18) comprise on the one hand a second tubular element (5) which is mounted to slide in the first tubular element so that one (6) of its ends discharges onto the outer face of the plate and so that it has at its other end (7) a part (10) emerging from the free end (8) of the first tubular element, the seal (9) which abuts the said free end being mounted on the said part which is emerging from the second tubular element so that a longitudinal displacement of the said second tubular element within the first, which results in a displacement of the part (10) which emerges towards the interior of the first tubular element produces a compression of the seal (9) and therefore an increase in the outside diameter of this latter and, furthermore, drive means (6, 11, 12, 13, 14, 17, 18) disposed on the same side as the outer surface of the plate and adapted to co-operate with the second tubular element, at the end (6) of this latter which is close to the plate, in such a way as to provide the said longitudinal displacement of the second tubular element resulting in compression of the seal (9).

2. A system according to Claim 1, characterised in that the plate has in its central part a cup-shaped depression (2) in the bottom of which there is the orifice (3) carried by the plate and in that the end (6) of the second tubular element (5) which is situated on the same side as the plate discharges into the said cup and the drive means (6, 11, 12, 13, 14, 17, 18) associated with the second tubular element are housed in this cup.

3. A system according to Claim 2, characterised in that the end (6) of the second tubular element which discharges into the cup in the plate is designed in the form of a collar which opens towards the outside and in that the drive means comprise a first internally screw-threaded ring (11) mounted in the cup (2) of the plate in such a way that it can be made rotationally rigid in respect of the said cup, a second ring (12) having inner and outer screw threads cut in opposite directions and screwing into the first ring (11), the said second ring (12) comprising at its end which is towards the bottom of the cup an inner annular rebate (13) on which rests the collar (6) of the second tubular element (5), and an operating means (14) in the form of a hollow plug comprising a plurality of orifices (15) provided in its wall, through which the water can pass and of which the part which is at the open end side (16) screws into the second ring (12) via an outer screw thread (17), the said screw thread being arrested against a shoulder (18) disposed in the said operating means and having a length which is not greater than that of the internal screw thread of the second ring (12).

4. A system according to one of Claims 1 to 3, characterised in that the free end (8) of the first tubular element (4) and the corresponding end (7) of the second tubular element are each provided with an outer collar, the said collars (23, 24) forming a pair of annular jaws which grip the seal (9) mounted on the part (10) of the second tubular element (5).

5. A system according to one of Claims 1 to 3, characterised in that the free end (8) of the first tubular element (4) has no collar and in that the sleeve forming the compressible seal (9) is provided with an annular groove (25) provided in its surface (26) which is towards the side of the first tubular element (4), the said end (8) being housed in the said groove and forming an abutment for the sleeve (9), and the end (7) of the second tubular element (5) is provided with an outer collar (24) on the inside surface of which bears the non-grooved surface of the sleeve.

6. A system according to one of Claims 1 to 3, characterised in that the free end (8) of the first tubular element (4) has no collar and in that the sleeve forming the compressible seal (9) is provided with an annular groove (25) disposed in its surface (26) which is towards the side of the first tubular element, the said end (8) being housed in the said groove and forming an abutment for the sleeve (9) and the inner lateral surface (28) of the sleeve-shaped seal (9) is provided with studs (29) adapted to be inserted under force in the apertures (30) provided in the wall of the part (10) of the second tubular element (5) which emerges from the first tubular element (4).

7. A system according to one of Claims 1 to 6, characterised in that the elastic material constituting the compressible seal is an elastomeric material.

8. A system according to one of Claims 1 to 7, connecting the sealing-tight covering (31) of a terraced roof (19) to a rainwater evacuation pipe (20) so that the plate (1) of the said system rests in fluid-tight manner on the sealing-tight material (31) of the terraced roof and so that the part of this system which comprises the seal (9) is housed in the said pripe (20), the seal (9) being compressed against the inside wall (32) of this pipe (20) in order to ensure sealing-tightness.

9. A system according to Claim 9, characterised in that the edge of the plate (1) is sandwiched between two layers (21, 22) of the sealing-tight material (31) of the terraced roof (19).

FIG_1

FIG_2

FIG_3